(19) Europäisches Patentamt
European Patent Office
Office européen des brevets

(11) **EP 4 530 760 A1**

(12) **EUROPEAN PATENT APPLICATION**

(43) Date of publication:
**02.04.2025 Bulletin 2025/14**

(21) Application number: **24203377.7**

(22) Date of filing: **27.09.2024**

(51) International Patent Classification (IPC):
**G05B 13/04** $^{(2006.01)}$

(52) Cooperative Patent Classification (CPC):
**F02C 9/56; G05B 13/048; B64D 31/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023 US 202318478084**

(71) Applicant: **RTX Corporation**
**Farmington, CT 06032 (US)**

(72) Inventors:
• **KUMAR, Pratyush**
  **Farmington, 06032 (US)**
• **RIAR, Baljit**
  **Farmington, 06032 (US)**
• **POLLOCK, Daniel T.**
  **Farmington, 06032 (US)**
• **ILAK, Milos**
  **Farmington, 06032 (US)**

(74) Representative: **Dehns**
**10 Old Bailey**
**London EC4M 7NG (GB)**

(54) **NEURAL NETWORK BASED FAST MODEL PREDICTIVE CONTROL FOR POWER REGULATION**

(57)     A power system (100) includes a power source configured to output electrical power, a power converter (104, 114) configured to convert the electrical power into a converted power, and a power bus (120) configured to deliver the converted power to a power load (123) connected to the power bus. The power system further includes a controller (130, 136, 200, 202) that implements a neural network (NN) (46, 136) trained to perform a NN-based model predictive control (NNMPC) (136). The controller utilizes the NNMPC to obtain at least one learned control input for power regulation for a current system state and power load measurement of the power load in real-time, and to perform an output action that regulates the power system based on the at least one learned control input obtained by the NNMPC.

FIG. 1

**Description**

BACKGROUND

Exemplary embodiments of the present disclosure relate generally to aircraft power systems and, in particular, to a control system for real-time power regulation.

Aircraft power systems supply electrical power to various aircraft systems and components that require direct current, such as avionics, lighting, sensors, and more. Proper voltage regulation is essential to ensure reliable and consistent operation of these systems throughout the flight. This task of voltage regulation is accomplished via a control system that is systematically designed for the power system of interest. Traditional control systems for voltage regulation in power systems use proportional-integral (PI) or droop control laws. PI control, however, can be difficult to tune effectively for maintaining stable and fast responses in complex dynamic environments. Droop control may be advantageous over PI control for load sharing among parallel sources in power systems, promoting simplicity and robustness in redundant configurations. However, droop control can introduce intentional voltage deviations to achieve load sharing, which can result in wider voltage variations, potentially impacting the performance of sensitive equipment, and its operation complexity increases with the number of sources in the system. Power systems employ either a DC or AC bus that utilizes electric currents provided by various energy sources in the aircraft such as generator, battery, and supercapacitor to deliver the final current to downstream systems in the aircraft.

BRIEF DESCRIPTION

According to a first aspect of the invention, a method of performing power regulation in an aircraft power system is provided. The method comprises generating, for each of a plurality of power loads, a respective control inputs configured to regulate a power system, and training a neural network (NN) to learn different control inputs for controlling power regulation for each of the plurality of power loads and to mimic a model predictive control (MPC) to establish an NN-based MPC (NNMPC). The method further comprises utilizing the NNMPC to obtain at least one learned control input for power regulation for a current system state and power load measurement in real-time, and performing an output action that regulates the power system based on the at least one learned control input obtained by the NNMPC.

Optionally, the method includes regulating a DC voltage of the DC bus.

Optionally training the NN includes learning different control inputs for regulating the DC voltage for each of the plurality of power loads; utilizing the NNMPC includes obtaining the at least one learned control input for regulating the DC voltage of the DC bus; and performing the output action includes regulating the DC voltage of the DC bus based on the at least one control input obtained by the NNMPC.

Optionally, the output action incudes controlling one or both of an alternating current-to-direct current (AC/DC) converter and a direct current-to-direct current (DC/DC) converter.

Optionally, the method includes: defining a MPC optimization problem to be solved by the MPC; inputting parameters defining the MPC solution into the feedforward NN; and training the NN by solving a supervised learning problem based on training data collected from closed-loop simulations with the power system model and the MPC controller.

Optionally, the training data includes different sampled power loads that may be drawn from the DC bus during an actual aircraft mission.

Optionally, the MPC optimization problem is a nonlinear program and includes reducing an error between an actual DC voltage appearing on the DC bus and a target DC voltage set point.

Optionally, the input parameters include an actual DC voltage ($V\_Bus$) present on the DC bus, a battery state of charge ($ESoc$), a generator torque ($Tg$) of a generator employed in the aircraft power system, a battery current ($IBat$), a power draw ($P\_dist$) realized by the DC bus, a previous current setpoint ($I_{Batsp, -1}$) request from a battery employed in the aircraft power system, and a previous torque setpoint ($T_{gsp, -1}$) request from the generator

Optionally, the MPC includes constraints on the DC bus voltage to be satisfied during transients to ensure high power quality throughout operation.

Optionally, the MPC optimization problem is formulated using a dynamic move blocking method to improve a MPC solution time, and to subsequently reduce training data generation time to establish the NNMPC.

Optionally, the NNMPC is utilized to enable the reduction of capacitance at the DC bus, thereby enabling weight and cost savings during aircraft manufacturing.

According to a second aspect of the present invention there is provided a power system which includes a power source configured to output electrical power, a power converter configured to convert the electrical power into a converted power, and a power bus configured to deliver the converted power to a power load connected to the power bus. The power system further includes a controller that implements a neural network (NN) trained to perform a NN-based model predictive control (NNMPC). The controller utilizes the NNMPC to obtain at least one learned control input for power regulation for a current system state and power load measurement of the power load in real-time, and to perform an output action that regulates the power system based on the at least one learned control input obtained by the NNMPC.

These and other advantages and features will become more apparent from the following description taken in conjunction with the drawings.

BRIEF DESCRIPTION OF THE DRAWINGS

The following descriptions should not be considered limiting in any way. With reference to the accompanying drawings, like elements are numbered alike:

FIG. 1 is a block diagram illustrating a control system configured to perform power regulation in a hybrid electric aircraft system;

FIG. 2 is a block diagram illustrating a control system configured to perform DC bus voltage regulation;

FIG. 3 depicts first and second PI controllers configured to perform power regulation;

FIG. 4 is a diagram depicting the structure of a standard feedforward neural network with the input, hidden, and output layers;

FIG. 5 is a block diagram illustrating a computing device configured to utilize a trained NN-based MPC to perform power regulation during a real-time aircraft flight;

FIG. 6 is a block diagram illustrating a controller 136 that utilizes a trained NN-based MPC to generate the control inputs capable of performing power voltage regulation based on real-time sensor measurements of the system state and power loads;

FIG. 7 is a flow diagram illustrating the method of establishing and using a NN-based MPC to perform power regulation; and

FIG. 8 is a schematic view of an example first computing device used to train a neural network.

These and other advantages and features will become more apparent from the following description taken in conjunction with the drawings.

DETAILED DESCRIPTION

A detailed description of one or more embodiments of the disclosed apparatus and method are presented herein by way of exemplification and not limitation with reference to the Figures.

Model Predictive Control (MPC) is an advanced control strategy that can optimize the performance of a dynamic system such as, for example, a power system, and is particularly suited for large, multivariable systems that are subject to constraints and have a predictive model available. MPC involves using a mathematical model of the system to predict its future behavior based on its current state and the control inputs applied. The controller then generates a sequence of control inputs over a finite time horizon while optimizing an objective function that reflects the desired system behavior and objectives. This sequence of inputs is usually calculated by solving an optimization problem in real-time. At every time step, the first optimal input from the sequence is applied to the system, and the optimization problem is resolved at the next sampling instant after new measurements are obtained.

A common optimization problem involves performing power regulation such as DC bus voltage regulation, e.g., optimizing the error in the DC bus by reducing the difference between the actual DC voltage and the DC bus voltage set point. The MPC can have a significant potential to improve performance of some dynamic systems over traditional approaches such as proportional integral or droop control laws. However, a traditional MPC approach cannot be utilized in aircraft power systems to control DC bus regulation due to fast dynamics of such systems evolving on the order of milliseconds, and real-time optimization problems cannot be solved at that timescale.

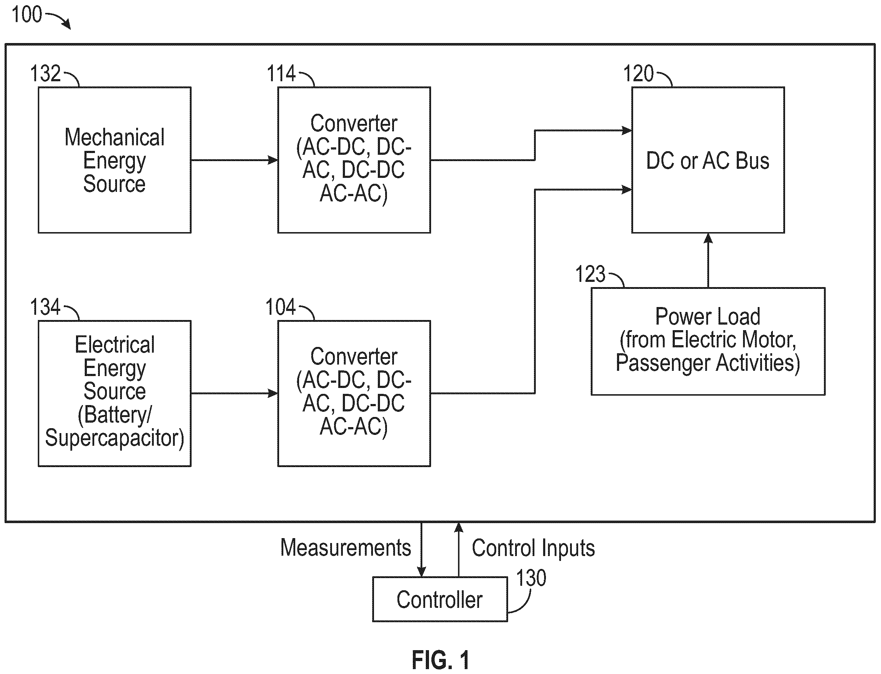

Various non-limiting embodiments described herein provide a neural network (NN)-based approach to implement MPC in real time and improve control performance in power systems. In one or more non-limiting embodiments, the NN is designed and trained in an offline step using training data generated via closed-loop simulations with the system model and the MPC controller. The trained NN deployed in real time to control an aircraft power system. In at least one non-limiting embodiment, the trained NN can perform fast model predictive control to perform DC bus voltage regulation and maintain a target voltage across the DC bus and ensure high power quality. Various non-limiting embodiments described below can apply to power regulation for the class of systems (e.g., illustrated in Figure 1). Accordingly, the DC bus voltage regulation operations described herein are used as examples to describe various non-limiting embodiments of the present disclosure.

FIG. 1 is a block diagram illustrating a power system 100 in a hybrid electric aircraft system according to a non-limiting embodiment of the present disclosure. The power system 100 includes a controller 130 configured to perform power regulation in the hybrid electric aircraft system. The power regulation can include, but is not limited to, bus voltage regulation, battery state of charge tracking, rate of change penalty on the control inputs, and threshold constraints on the bus voltage to be satisfied during transients.

The power system 100 includes a mechanical energy source (MES) 132, a first power converter 114, an electrical energy source (EES) 134, a second power converter 104, a power bus 120, and a power load 123. The MES 132 includes, for example, an aircraft turbogenerator, which generates electrical power (e.g., AC power) in response to rotating the aircraft's gas turbine generator, thereby converting mechanical energy into electrical power. The EES 134 includes, for example, a battery and/or super capacitor, which outputs electrical power (e.g., DC power). The DC power can be used for various functions, including starting the aircraft's engines, providing power to essential avionics systems, and supplying backup power in case of electrical system failures. The output of the MES 132 and/or the EES 134 is used to power various loads and electrical systems of the aircraft.

The first power converter 114 can convert or transform electrical energy output from the MES 132 from one form to another. For example, the first power converter 114 can convert alternating current (AC) to direct current (DC) or vice versa, change voltage levels (a first AC voltage to a second AC voltage level or a first DC voltage level to a second DC voltage level), and modify the frequency of the electrical signal as needed for various applications such as in power electronics or renewable energy systems. The first power converter 114 can include, but is not limited to, an AC-to-DC converter, a DC-to-AC converter, a DC-to-DC converter, and an AC-to-AC converter.

The second power converter 104 can convert or transform the electrical energy output from the EES 134 from one form to another. For example, the second power converter 134 can convert direct current (DC) to alternating current (AC) or vice versa, change voltage levels (a first DC voltage to a second DC voltage level or a first AC voltage level to a second AC voltage level), and modify the frequency of the electrical signal as needed for various applications such as in power electronics or renewable energy systems. The first power converter 114 can include, but is not limited to, an DC-to-DC converter, a DC-to-AC converter, a AC-to-AC converter, and an AC-to-DC converter.

The power bus 120 is configured to deliver power output from the first converter 114 and/or the second converter 104 to the power load 123. In one or more non-limiting embodiments the power bus 120 can include an AC power bus and/or a DC power bus. The power load 123 connected to the power bus 120 can include, but is not limited to, an electric motor, flight control electronics, and cabin lighting systems.

The controller 130 monitors various operating parameters associated with the power system 100. The operating parameters can be measured by one or more sensors and/or can be computed by controller 130. Based on the operating parameters, the controller 130 can generate one or more control inputs for performing power regulation operations as described herein.

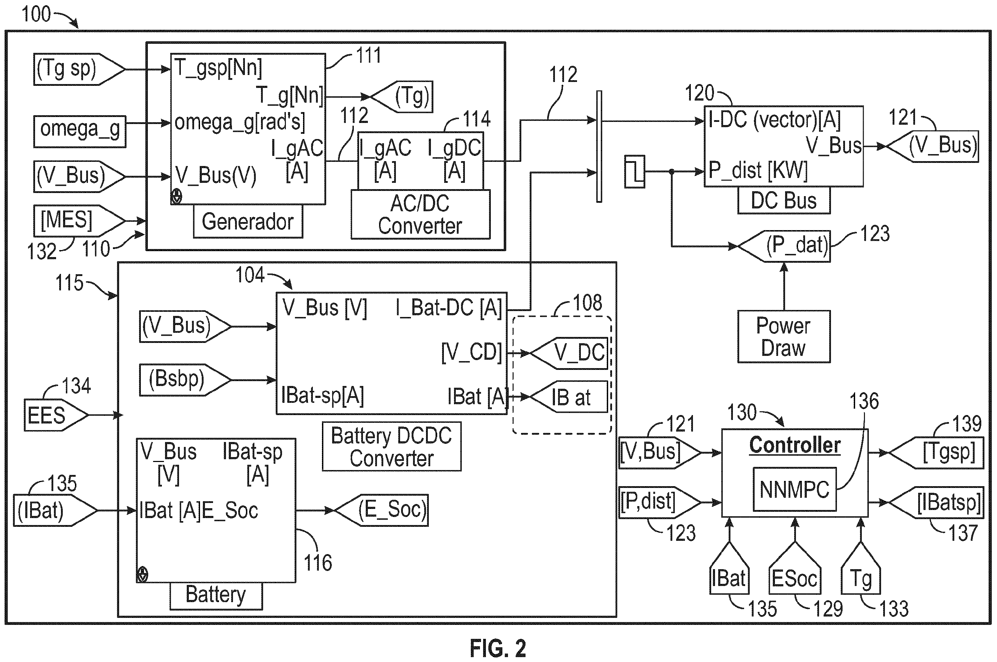

Turning to FIG. 2, a power system 100 containing a controller 130 configured to perform power regulation in power system is illustrated according to a non-limiting embodiment of the present disclosure. One example of power regulation performed by the power system 100 involves DC bus voltage regulation. It should be appreciated, however, that other power system 100 and controller design described herein can solve various other types of optimization problems including, but not limited to, battery state of charge tracking, rate of change penalty on the control inputs, and threshold constraints on the DC bus voltage to be satisfied during transients.

According to a non-limiting embodiment of the present disclosure, power system 100 is established as a closed-loop system and includes an mechanical energy source (MES) 110, an electrical energy source (EES) (115), a DC bus 120, and a controller 130. The power system 100 can be implemented on various types of aircrafts including, but not limited to, all electric aircraft, a hybrid-electric aircraft, a more-electric, a turbo-electric aircraft, or a fuel cell powered aircraft. In certain embodiments, it is contemplated the aircraft is a liquid or gas powered aircraft.

The MES 110 includes a generator 111 and a controllable AC-to-DC (AC/DC) converter 114. The generator 111 can be controlled to have a variable output such that the AC/DC converter 114 can be connected to the DC bus 120. Accordingly, a first DC output such as a generator output current ($I\_gDC$) output from the AC/DC converter 114 can be delivered to the DC bus 120. The AC/DC converter 114 can be implemented using various architectures including, but not limited to, a bridge rectifier, a three-phase rectifier, and a bidirectional converter.

The EES 115 includes a battery 116 in signal communication with a DC-to-DC (DC/DC) converter 128. The state of charge ($E\_Soc$) in the battery 116 are driven by the current draw (IBat) from the battery. The output from the DC/DC converter 128 can include a converted DC output currents (e.g., IBat-DC). As illustrated in FIG. 2, the converted DC output current (e.g., IBat-DC) can be delivered to the DC bus 120.

The controller 130 is in signal communication with the MES 110, the EES 115, and the DC bus 120. The inputs of the controller 130 include a DC bus voltage signal (V_Bus) 121 indicative of the DC voltage on the DC bus 120, battery state of charge (E_Soc) 129, battery current draw (IBat) 135, generator torque (T_g) 133, and a power distribution signal (P_dist) 123 indicative of the power draw from the DC bus 120, a battery setpoint (IBatsp) 137, and a torque setpoint (Tgsp) signal 139. The controller 130 can perform one or more output actions to regulate the DC voltage of the DC bus 120. In one or more non-limiting embodiments, the output actions control signal for controlling the MES 110 and/or the EES 115. For example, the controller 130 outputs the generator torque setpoint (T_gsp) 139, an MES control signal 132 that controls the operation of the MES 110, and battery current setpoint (IBatsp) 137 an EES control signal 134 that controls the operation of the EES 115. The controller 130 can be implemented using both hard wired circuits that cause a logic to be executed, and/or software-based components, for example, simple electric circuits employing analogue pressure sensors, or can include a CPU, a memory, machine readable instructions in the memory that when executed cause the CPU to perform DC bus voltage regulation as described in greater detail below.

In one or more non-limiting embodiments, the AC/DC converter 114 and/or the DC/DC converter 104 can implement a switching circuit that is controlled by the controller 130 (e.g. by the MES control signal 132 and the EES control signal 134, respectively). For example, the MES control signal 132 can control a switching circuit of the AC/DC converter 114 to vary voltage of the DC output. In at least one non-limiting embodiment, the controller 130 automatically controls switching of the AC/DC converter 114 and/or the DC/DC converter 104 without user input.

According to a non-limiting embodiment, the controller 130 implements a NN-based MPC (NNMPC) 136. The NNMPC 136 is a NN that is designed offline to approximate the solution of the MPC optimization problem for realistic power system operational scenarios using data collected via closed-loop simulations with the DC bus 120, the MES 110, EES 115, and using an MPC as the controller 130. According to a non-limiting embodiment, the NNMPC 136 is a standard feedforward NN that is formulated by receiving as inputs the parameters determining the MPC solution. Then, the NN is trained using the data collected from the closed-loop simulations, and by solving a supervised learning problem using the obtained data. Finally, the trained NN is used in real time for a fast execution of the MPC to establish the NNMPC 136. Unlike conventional MPCs, the NNMPC 136 is capable of handling the fast dynamics (e.g., on the order of milliseconds or even sub-milliseconds) of aircraft power systems, and is therefore capable of performing DC bus voltage regulation of the DC bus 120. The DC bus voltage regulation includes, for example, maintaining the DC bus voltage (*V_Bus*) 121 at its setpoint under the presence of the power draw disturbance (*P_dist*) 123. Although a feedforward NN is described as an example of the NN used to establish the NNMPC 136, it should be appreciated that other types of neural networks can be used, such as, e.g., a recurrent neural network, or any other type of deep learning model.

Various sub-systems of the power system 100 described in FIG. 2 can be simulated using ordinary differential equations (ODEs), and the battery current and generator torque control loops can be modeled using first order transfer function models. The time constants in these transfer functions are appropriately tuned so that the model is representative of actual power systems. Accordingly, the dynamics of the DC bus 120, MES 110, and EES 115, in the power system 100 can be represented as a mathematical model, which can be used for controller design purposes. For example, the power system 100 can be modeled as described below.

DC bus:

$$\frac{dV_{Bus}}{dt} = \frac{I_{g-DC} + I_{Bat-DC}}{C_{Bus}} + \frac{P_d}{V_{Bus}C_{Bus}} \qquad \text{eq. 1;}$$

Battery:

$$\frac{dE_{SOC}}{dt} = \frac{-I_{Bat}}{q_{max}} \qquad \text{eq. 2;}$$

DC/DC converter:

$$I_{Bat}(s) = \frac{1}{(\tau_{DCDC}s + 1)}I_{Bat-sp}(s)$$

$$I_{Bat-DC} = \frac{I_{Bat}V_{oc}\eta_{DCDC}}{V_{Bus}} \qquad \text{eq. 3;}$$

and
Generator:

$$T_g(s) = \frac{1}{(\tau_g s + 1)} T_{gsp}(s)$$

$$I_{g-DC} = \frac{T_g \omega_g \eta_g}{V_{Bus}}$$

eq. 4

It should be noted that the above dynamics models are non-limiting, and that other complex models can be used for the MPC and NNMPC controller design purposes.

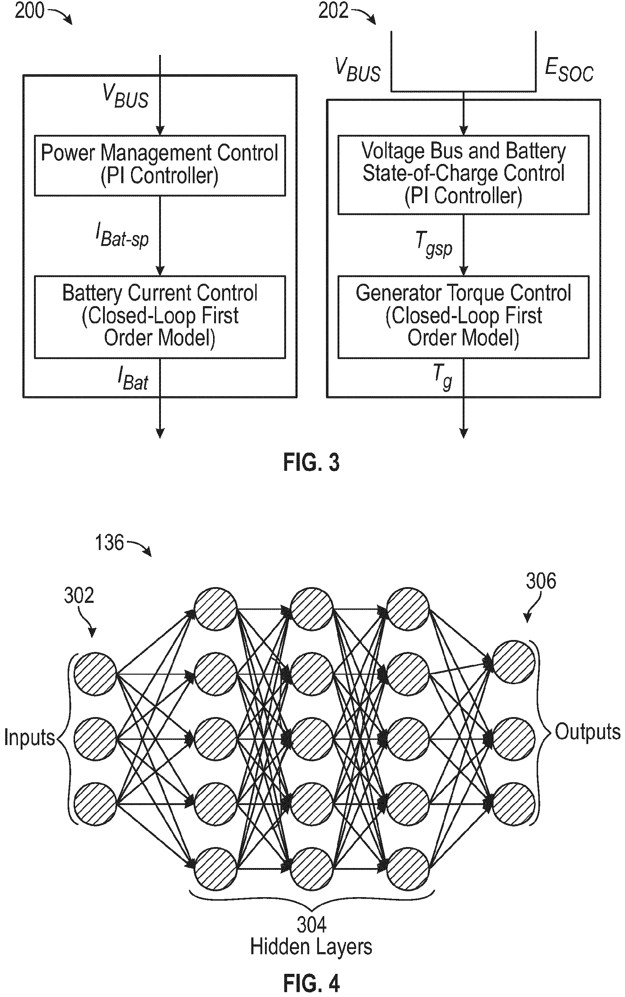

The traditional approach for feedback control of power systems is to rely on PI control laws facilitated by one or more PI controllers. Referring to FIG. 3, for example, a first PI controller 200 and a second PI controller 202 can establish two individual PI power system control feedback loops. The first PI controller 200 changes the battery current setpoint based on the measurements of the bus voltage. The first loop established by the first PI controller 200 is used to draw battery current at a fast time scale to inject power at the DC bus to reject fast transient disturbances. The PI controller 202 manipulates the generator torque setpoint and tracks a weighted sum of the voltage bus and battery state-of-charge setpoints. The second loop established by the second PI controller 202 is used to provide steady-state power to the DC bus and re-charge the battery at slower time scales. For both the first PI controller 200 and the second PI controller 202, a feedforward term is also used to proactively change the control inputs based on real time measurements of the power draw disturbance (P_dist) 123. The tuning parameters for the PI controllers 200 and 202 are chosen such that the time constant of the closed-loop response of the two loops are approximately the same as the bandwidths shown FIG. 3.

The dynamics of the variables regulated by the two PI controllers 200 and 202 interact with each other, so the combination of their two respective PI loops can result in a suboptimal performance. A model predictive control (MPC) algorithm can be formulated to systematically account for the dynamics and interactions between all the variables and determine the battery current and generator torque setpoints. The MPC controller may solve the suboptimal performance issue associated with the PI controllers 200 and 202. However, the dynamics of aircraft power systems are fast and a real time optimization-based MPC control solution is therefore not tractable.

As described herein, machine learning (ML)-based function approximators such as NNs can be used to approximate the solution of the MPC optimization problem in an offline design step. According to a non-limiting embodiment, the MPC problem is a nonlinear program that is solved to determine the control inputs for the regulation of the DC voltage bus 120 at a target bus voltage (V_BUSSP) 120. Once the solution of the optimization problem is approximated using a NN, it can next be used in real time in place of solving the MPC optimization problem online.

According to a non-limiting embodiment, the NN can be designed by first generating the NN training data. The NN training data can be generated by performing closed-loop simulations with the power system 100, and using an MPC as the controller 130. Realistic operational scenarios for the system such as different power loads that may be drawn from the DC bus during aircraft missions can be sampled. These realistic power loads are applied to the system in the closed-loop simulations performed with the MPC controller. Next, all the data containing samples of the system state, power load, and the optimal control are collected as inputs and used as the training data for the NN. A standard feedforward NN is formulated to approximate the MPC controller as follows:

$$\begin{bmatrix} \tilde{I}_{Batsp} \\ \tilde{T}_{gsp} \end{bmatrix} = f_N\left(V_{Bus}, I_{Bat}, E_{SOC}, T_g, \tilde{I}_{Batsp,-1}, \tilde{T}_{gsp,-1}\ P_d; \Theta_{NN}\right)$$

eq. 5

The NN defined in equation 5 takes as inputs the states (*V_Bus, I_Bat, E_SOC, T_g*) in the power system 100, previous control inputs ($\tilde{I}$_{Batsp,-1}, $\tilde{T}$_{gsp,-1}), and the power load (P_dist), and outputs an approximation of the MPC solution for the battery current and generator torque setpoint. The variable $\Theta_{NN}$ denotes the weights and biases in the different layers in the NN, which are determined by solving the following supervised learning problem:

$$\min_{\Theta_{NN}} \sum_{i=0}^{N_s} \left\| \begin{bmatrix} I^0_{Batsp,i} \\ T^0_{gsp,i} \end{bmatrix} - f_N\left(V_{Bus,i}, I_{Bat,i}, E_{SOC,i}, T_{g,i}, \tilde{I}_{Batsp,-1}, \tilde{T}_{gsp,-1}, P_{d,i}; \Theta_{NN}\right) \right\|^2$$

eq. 6

The NN training optimization problem expressed in equation 6 can then be solved using a stochastic gradient-based algorithm.. According to a non-limiting embodiment, a target amount (e.g. 20 percent) of the training data can be retained as a holdout set. Accordingly, the optimization problem loss is monitored on the holdout set at the end of every epoch. At the end of the training, weights of the NN can be chosen, which provide the best loss on the holdout set for final NN validation. This ensures that the NN weights are not overfitted to the training data. In a non-limiting embodiment, all the input and output samples can be scaled using the mean and standard deviation of each variable to facilitate the scaling of the above supervised learning problem. After the training and validation processes, the NN can be used as a surrogate of the MPC to implement the controller 130 and establish the NNMPC 136 for final deployment.

FIG. 4 is a diagram depicting the structure of an example feedforward NN 136, which can be trained to approximate the solution of an optimization problem such as, for example, implementing an approximate MPC capable of performing DC bus voltage regulation at fast time scales in an aircraft power system. As shown, the NN 136 includes an input layer 302, an output layer 306, and a plurality of hidden layers 304 therebetween.

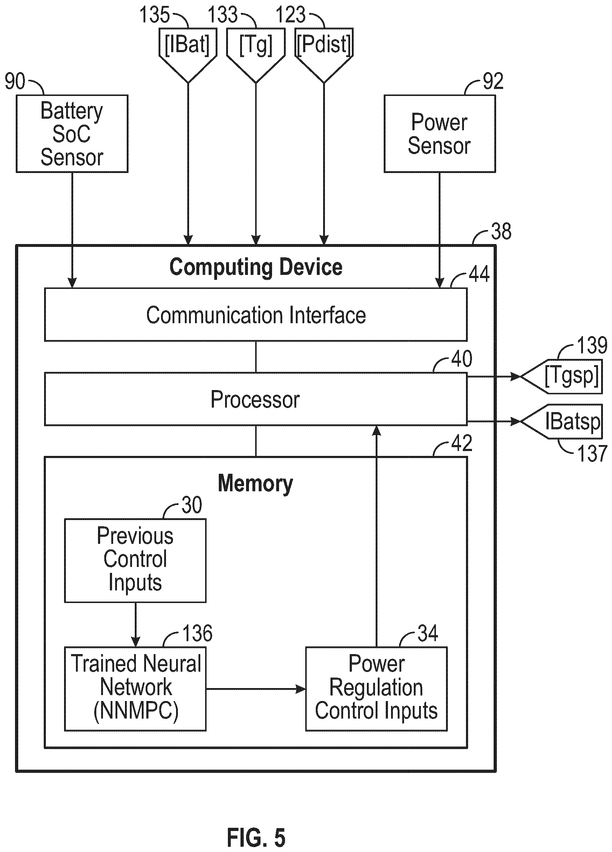

Turning to FIG. 5, a computing device that is configured to utilize the trained NN 136 during an actual flight according to a non-limiting embodiment. According to a non-limiting embodiment, the computing device is the controller 130 illustrated in FIG. 2. It should be appreciated, however, that the computing device can be an independent computing device separate from the controller 130.

The controller 130 includes a processor 40 and memory 42. The memory 42 stores the control inputs at the previous time step , the weights and biases in the neural network establishing the NNMPC 136, and performs the calculations to output the control inputs for power regulations such as, for example, DC bus voltage regulation 34.

In one or more non-limiting embodiments, the controller 130 may utilize communication interface 44 to obtain a battery state of charge level from a battery state of charge sensor 90, the voltage measurements appearing on the DC bus from a DC bus voltage sensor 92, and some other sensor measurements of the system state and power load as shown in FIG 4. Accordingly, the processor 40 utilizes the NNMPC 136, to determine one or more control inputs for the DC bus voltage regulation 34 for a given set of sensor measurements, by performing the calculations in the memory 42. Based on the obtained control inputs for the DC bus voltage regulation 34, the processor 40 can generate the MES control signal generator torque setpoint (Tgsp) 139 to control the MES 110, and/or EES control signal battery current setpoint (IBatsp) 137 to control the EES 115 and perform the DC bus voltage regulation.

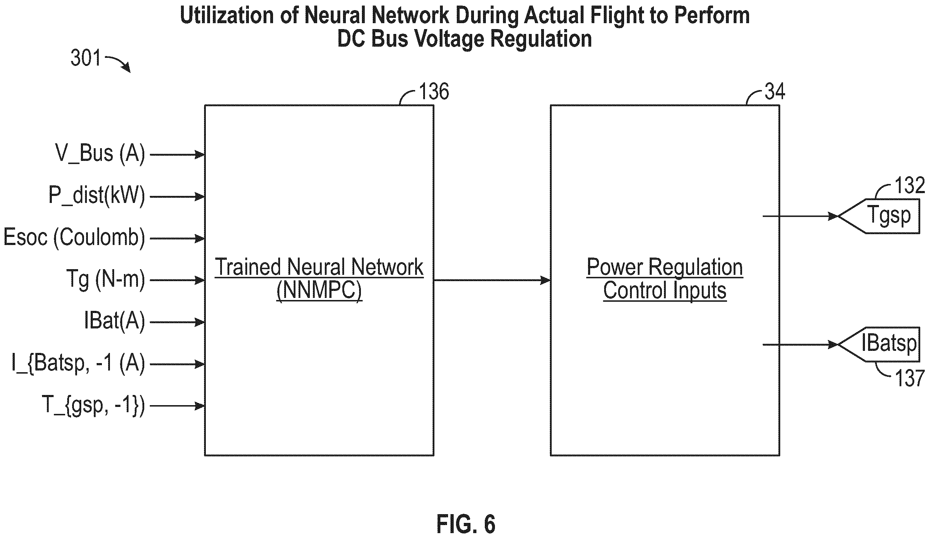

FIG. 6 is a diagram depicting how the controller 136 can use the trained neural network, i.e., the NNMPC 136, to generate the control inputs for DC bus voltage regulation 34 capable of performing DC bus voltage regulation given the sensor measurements and previous control inputs. As shown, the NNMPC 136 receives a plurality of inputs 301, and outputs the control inputs for DC bus voltage regulation 34. The inputs 301 included, but are not limited to, the DC voltage (V_Bus) present on the DC bus 120, the power draw (P_dist) realized by the DC bus 120, the battery state of charge (ESoc) 129, the generator torque (Tg) 133, the battery current (IBat) 135, the previous current setpoint request (I_{Batsp, -1}) from the battery 116, and the previous torque setpoint (T_{gsp, -1}) requested from the generator 114. The inputs can be provided by one or more sensors on-board the aircraft and/or can be calculated by the controller 130. Based on the computed control inputs for the DC bus voltage regulation 34, the controller 130 can output a MES control signal 132 to the control MES 110 and/or the EES control signal 134. For example, the MES control signal 132 can control the switching time of the AC/DC converter 114 and the EES control signal 134 can control the switching time of the DC/DC converter 104. In this manner, the controller 130 can regulate the DC bus voltage. e.g., maintain a target DC bus voltage, as prescribed by the desired setpoint value.

The trained NN-based MPC 136 is well-suited for use in real-time instead of implementing a traditional MPC (e.g., non-linear MPC) on an aircraft, as the calculations associated with determining DC bus voltage regulation profiles 34 from the neural network 136 are less complex, and correspondingly require less computing power than utilizing a traditional MPC in real-time. In one example, utilizing the NN-based MPC 136 achieved a computational speed increase of approximately 1,600 times faster on average than using a nonlinear MPC controller to determine the control inputs for the DC bus voltage regulation 34. Due to this computational efficiency, and the potentially small size of the trained neural network, the NNMPC 136 is suitable for deployment on memory constrained hardware that would otherwise not be well-suited for deploying the optimization-based MPC controller on a flight since an MPC would require powerful computing resources onboard to solve optimization problems in real time. Moreover, the NNMPC 136 is well-suited for adapting to such real time changes in power loads, because the offline training data is generated using the MPC accounting for the possible real time changes in the power loads.

In addition to determining DC bus voltage regulation profiles 34, NNMPC 136 can perform other operations associated with regulating the DC bus voltage. For example, the NNMPC 136 can also be used to optimize the DC bus voltage setpoint based on mission level objectives such as energy use minimization, and the NNMPC 136 is used to provide the setpoint in real time to the power system.

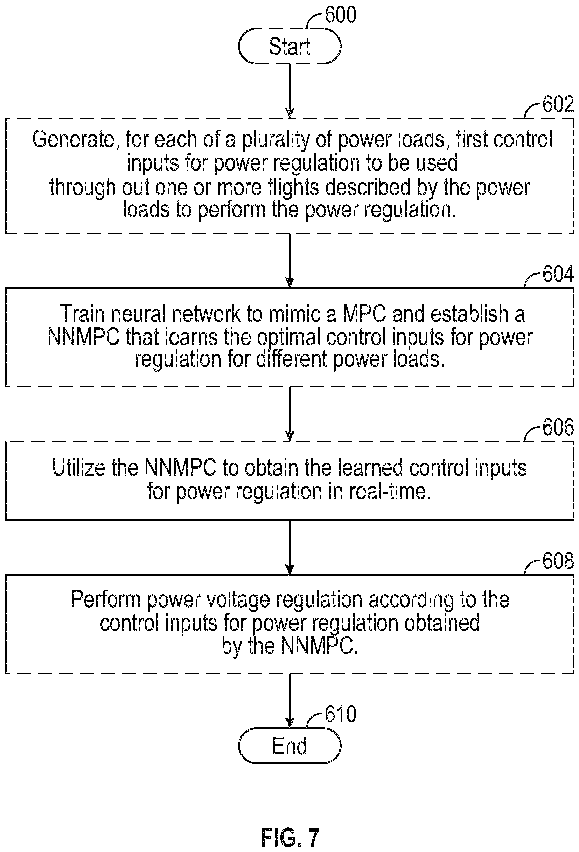

Turning now to FIG. 7, a method of establishing and using a NN-based MPC to perform DC bus voltage regulation is illustrated according to a non-limiting embodiment of the present disclosure. According to a non-limiting embodiment, the method illustrated in FIG. 7 can be performed, for example, by the controller 130 shown in FIG. 2.

The method illustrated in FIG. 7 begins at operation 600, at operation 602 first control inputs are generated for each of a plurality of power loads to perform power regulation. The first control inputs can be used throughout one or more flights described by the power loads to perform power regulation. In one or more non-limiting embodiments, the control inputs are intended to perform DC bus voltage regulation for flights of an aircraft. At operation 604, a neural network is trained to mimic a MPC and establish a NNMPC that learns the optimal control inputs for the power regulation for different power loads that may be encountered during aircraft missions. As described herein, the power regulation can include, for example, DC voltage regulation of the DC bus. At operation 606, the trained NNMPC is utilized to obtain a learned control input for the power regulation based on the current measurements and power loads performed in an actual real-time flight. The learned control inputs can be control inputs (e.g., power converter control signals) for regulating the DC voltage of the DC voltage bus. At operation 608, an output action is executed to perform power regulation according to the control inputs obtained by the NNMPC and the method ends at operation 610. In one example, performing of the output action in step 608 includes controlling the AC/DC converter and/or the DC/DC converter to maintain the DC bus at a target DC voltage.

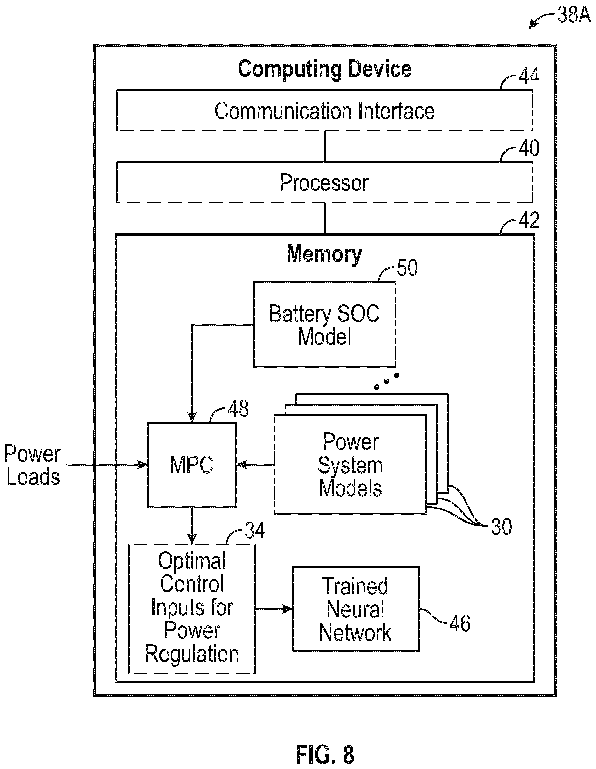

FIG. 8 is a schematic view of an example first computing device 38 which may be used to train a neural network 46. The computing device 38 includes a processor 40 operatively connected to a memory 42 and a communication interface 44. The processor 40 includes processing circuitry such as one or more microprocessors, microcontrollers, application specific integrated circuits (ASICs), or the like. The memory 42 may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 42 may incorporate electronic, magnetic, optical, and/or other types of storage media. The communication interface 44 is operable to communicate with external devices for sending and receiving data.

For the computing device 38, the memory 42 stores an MPC 48 and/or a nonlinear MPC as described herein. The memory 42 also stores a battery state of charge (SOC) model 50 that models a state of charge of one or more batteries 13, and a plurality of power system models 30 describing a plurality of corresponding flights. The memory 42 also stores plurality of anticipated power loads that may be encountered by the power system during actual flights of an aircraft.

The MPC 48 receives power loads and generates one or more optimal control inputs corresponding to one or more power regulation profiles 34, and the processor 40 uses the power regulation profiles 34 as training data to train neural network 46. The various power regulation profiles 34 for a given power system model 30 provides a series of optimal control inputs that can be used throughout a flight described by the power system model 30 and regulate power of a corresponding power system model 30.

Regulation of the DC voltage on the DC bus is only one example of an optimization problem that can solved to establish an NNMPC as described herein. For example, other MPC optimization problems include constraints on the DC Bus voltage to be satisfied during transients to ensure high power quality throughout operation. Other optimization problems that can be solved using the NNMPC of the present disclosure include, but are not limited to, battery state of charge tracking, rate of change penalty measurements, and verifying constraints on the DC Bus voltage to be satisfied during transients. For example, the MPC optimization problem can be formulated using a dynamic move blocking method to improve the MPC solution time, and to subsequently reduce the training data generation time to establish the NNMPC. In another example, the NNMPC can be utilized to reduce the capacitance at the DC Bus, enabling weight and cost savings during the aircraft manufacturing. In another example, the NNMPC can be used to ensure optimal utilization and sizing of different resources such as batteries, supercapacitors, and impedance of the DC Bus. The NNMPC can determine a minimum size of resources needed for different mission profiles during the design phase. In addition, the NNMPC can enable optimal utilization of the resources during real time operation for extending their life or can slow down their degradation by keeping the voltages/current within appropriate limits enforced in the MPC optimization problem. In another example, the bidirectional nature of batteries that provide power to various DC buses can be explicitly accounted for in the MPC optimization problem and establishing the NNMPC.

In another example, the NNMPC can be used to differentiate and classify critical (e.g., loads for aircraft propulsion and lightning in the aircraft) and noncritical (e.g., loads for passenger entertainment) power loads in an aircraft, and to optimally allocate power for both types of loads.

In another example, discrete control inputs for energy supply from the MES and EES are explicitly treated in the MPC optimization problem and establishing the NNMPC.

As described herein, one or more non-limiting embodiments of the present disclosure provide a NN-based approach to implement MPC in real time and power regulation in power systems. In one or more non-limiting embodiments, the NN is designed and trained in an offline step using data generated via closed-loop simulations with the system model and the MPC controller. The trained NN is deployed in real time to establish a NN-based MPC referred to as a "NNMPC", which is capable of performing fast model predictive control of the power regulation to maintain one or more target power parameters and ensure high power quality. The NNMPC is capable of being deployed on memory constrained hardware that is otherwise not possible with the real-time optimization-based model predictive control method.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of performing power regulation in an aircraft power system (100), the method comprising:

   generating, for each of a plurality of power loads (123), a respective control inputs configured to regulate a power system;
   training a neural network (NN) (46, 136) to learn different control inputs for controlling power regulation for each of the plurality of power loads and to mimic a model predictive control (MPC) (48) to establish an NN-based MPC (NNMPC) (136);
   utilizing the NNMPC to obtain at least one learned control input for power regulation for a current system state and power load measurement in real-time; and
   performing an output action that regulates the power system based on the at least one learned control input obtained by the NNMPC.

2. The method of claim 1, wherein the power system includes a direct current (DC) bus, and wherein the power regulation includes regulating a DC voltage of the DC bus (120).

3. The method of claim 2, wherein:

   training the NN includes learning different control inputs for regulating the DC voltage for each of the plurality of power loads;
   utilizing the NNMPC includes obtaining the at least one learned control input for regulating the DC voltage of the DC bus; and
   performing the output action includes regulating the DC voltage of the DC bus based on the at least one control input obtained by the NNMPC; and/or

   wherein the output action incudes controlling one or both of an alternating current-to-direct current (AC/DC) converter (114) and a direct current-to-direct current (DC/DC) converter.

4. The method of any preceding claim, wherein the training includes:

   defining a MPC optimization problem to be solved by the MPC;
   inputting parameters defining the MPC solution into the feedforward NN; and
   training the NN by solving a supervised learning problem based on training data collected from closed-loop simulations with the power system model and the MPC controller (130, 136, 200, 202).

5. The method of claim 4, wherein the training data includes different sampled power loads that may be drawn from the DC bus during an actual aircraft mission.

6. The method of claim 5, wherein the MPC optimization problem is a nonlinear program and includes reducing an error between an actual DC voltage appearing on the DC bus and a target DC voltage set point; and, optionally, wherein the input parameters include an actual DC voltage (V_Bus) (121) present on the DC bus, a battery state of charge (ESoc), a generator torque (Tg) (133) of a generator (111) employed in the aircraft power system, a battery current (IBat) (135), a power draw (P_dist) (123) realized by the DC bus, a previous current setpoint (I_{Batsp, -1}) request from a battery (116) employed in the aircraft power system, and a previous torque setpoint (T_{gsp, -1}) request from the generator.

7. The method of claim 5, wherein the MPC includes constraints on the DC bus voltage to be satisfied during transients to ensure high power quality throughout operation; or
wherein the MPC optimization problem is formulated using a dynamic move blocking method to improve a MPC solution time, and to subsequently reduce training data generation time to establish the NNMPC.

8. The method of claim 3, wherein the NNMPC is utilized to enable the reduction of capacitance at the DC bus, thereby enabling weight and cost savings during aircraft manufacturing.

9. A power system (100) comprising:

at least one power source configured to output at least one type of electrical power;
at least one power converter (104, 114) in signal communication with the at least one power source, the at least one power converter configured to convert the at least one type of electrical power into a converted power;
a power bus (120) in signal communication with the at least one power converter to receive the converted power and deliver the converted power to a power load (123) connected to the power bus; and
a controller (130, 136, 200, 202) that implements a neural network (NN) (46, 136) trained to perform a NN-based model predictive control (NNMPC) (136), utilizes the NNMPC to obtain at least one learned control input for power regulation for a current system state and power load measurement of the power load in real-time, and to perform an output action that regulates the power system based on the at least one learned control input obtained by the NNMPC.

10. The power system of claim 9, wherein the power includes a DC bus (120), and wherein the power regulation includes regulating a DC voltage of the DC bus; and, optionally,
wherein the NN is trained by learning different control inputs for regulating the DC voltage for each of the plurality of power loads, utilizes the NNMPC by obtaining the at least one learned control input for regulating the DC voltage of the DC bus, and utilizes the output action to regulate the DC voltage of the DC bus based on the at least one control input obtained by the NNMPC.

11. The power system of claim 9 or 10, wherein the output action incudes controlling the at least one power converter.

12. The power system of any of claims 9 to 11, wherein the NN is a feedforward NN.

13. The power system of claim 12, wherein the NN is trained according to operations comprising:

defining a MPC (48) optimization problem to be solved by the MPC;
delivering input parameters defining the MPC solution into the feedforward NN;
and
training the NN by solving a supervised learning problem based on training data collected from closed-loop simulations with the power system model and the MPC controller.

14. The power system of claim 13, wherein the training data includes different sampled power loads that may be drawn from the DC bus during an actual aircraft mission.

15. The power system of claim 14, wherein the MPC optimization problem is a nonlinear program and includes reducing an error between an actual DC voltage appearing on the DC bus and a target DC voltage set point; and optionally, wherein the input parameters include an actual DC voltage (V_Bus) (121) present on the DC bus, a battery state of charge (ESoc), a generator torque (Tg) (133) of a generator (111) employed in the aircraft power system, a battery current (IBat) (135), a power draw (P_dist) (123) realized by the DC bus, a previous current setpoint (I_{Batsp, -1}) request from a battery employed in the aircraft power system, and a previous torque setpoint (T_{gsp, -1}) request from the generator.

**FIG. 1**

**FIG. 2**

200 ⟍

$V_{BUS}$

Power Management Control
(PI Controller)

$I_{Bat-sp}$

Battery Current Control
(Closed-Loop First
Order Model)

$I_{Bat}$

202 ⟍

$V_{BUS}$               $E_{SOC}$

Voltage Bus and Battery
State-of-Charge Control
(PI Controller)

$T_{gsp}$

Generator Torque Control
(Closed-Loop First
Order Model)

$T_g$

**FIG. 3**

136 ⟍

302

Inputs

306

Outputs

304
Hidden Layers

**FIG. 4**

135 [IBat]  133 [Tg]  123 [Pdist]

90 Battery SoC Sensor

92 Power Sensor

38 Computing Device

44 Communication Interface

40 Processor

139 [Tgsp]

IBatsp 137

42 Memory

30 Previous Control Inputs

136 Trained Neural Network (NNMPC)

34 Power Regulation Control Inputs

**FIG. 5**

**Utilization of Neural Network During Actual Flight to Perform
DC Bus Voltage Regulation**

301

136

V_Bus (A) →

P_dist(kW) →

Esoc (Coulomb) →

Tg (N-m) → **Trained Neural Network
(NNMPC)**

IBat(A) →

I_{Batsp, -1 (A) →

T_{gsp, -1}) →

34

**Power Regulation
Control Inputs**

132

Tgsp

IBatsp

137

EP 4 530 760 A1

**FIG. 6**

```
                              ⌐600
                    ( Start )

                                              ⌐602
   ┌──────────────────────────────────────────────┐
   │  Generate, for each of a plurality of power    │
   │  loads, first control                          │
   │  inputs for power regulation to be used        │
   │  through out one or more flights described by  │
   │  the power                                     │
   │  loads to perform the power regulation.        │
   └──────────────────────────────────────────────┘

                                              ⌐604
   ┌──────────────────────────────────────────────┐
   │  Train neural network to mimic a MPC and       │
   │  establish a                                   │
   │  NNMPC that learns the optimal control inputs  │
   │  for power                                     │
   │  regulation for different power loads.         │
   └──────────────────────────────────────────────┘

                                              ⌐606
   ┌──────────────────────────────────────────────┐
   │  Utilize the NNMPC to obtain the learned       │
   │  control inputs                                │
   │  for power regulation in real-time.            │
   └──────────────────────────────────────────────┘

                                              ⌐608
   ┌──────────────────────────────────────────────┐
   │  Perform power voltage regulation according    │
   │  to the                                        │
   │  control inputs for power regulation obtained  │
   │  by the NNMPC.                                 │
   └──────────────────────────────────────────────┘

                              ⌐610
                    ( End )
```

FIG. 7

**FIG. 8**

**EP 4 530 760 A1**

# EUROPEAN SEARCH REPORT

**Application Number**

EP 24 20 3377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 772 148 A1 (RAYTHEON TECH CORP [US]) 3 February 2021 (2021-02-03) * paragraphs [0001] - [0017], [0027] - [0029], [0036] - [0043]; figures 2,3,5 * | 1-15 | INV. G05B13/04 |
| Y | BABAYOMI OLULEKE ET AL: "Smart grid evolution: Predictive control of distributed energy resources-A review", INTERNATIONAL JOURNAL OF ELECTRICAL POWER & ENERGY SYSTEMS, JORDAN HILL, OXFORD, GB, vol. 147, 13 December 2022 (2022-12-13), XP087247512, ISSN: 0142-0615, DOI: 10.1016/J.IJEPES.2022.108812 [retrieved on 2022-12-13] * 5 Artificial intelligence-based predictive control fig. 13, Table 5 on pages 12-13 * | 1-15 | |
| A | SAADATMAND SEPEHR ET AL: "Power and Frequency Regulation of Synchronverters Using a Model Free Neural Network-Based Predictive Controller", IEEE TRANSACTIONS ON INDUSTRIAL ELECTRONICS, IEEE SERVICE CENTER, PISCATAWAY, NJ, USA, vol. 68, no. 5, 9 April 2020 (2020-04-09), pages 3662-3671, XP011836429, ISSN: 0278-0046, DOI: 10.1109/TIE.2020.2984419 [retrieved on 2021-02-08] * B. Neural Network Predictive Control, fig. 3, 4, 5, on page 3665 * | 1-15 | **TECHNICAL FIELDS SEARCHED (IPC)** B64D G05B H02J |

The present search report has been drawn up for all claims

| Place of search | Date of completion of the search | Examiner |
|---|---|---|
| Munich | 7 February 2025 | Frey, Richard |

EPO FORM 1503 03.82 (P04C01)

## ANNEX TO THE EUROPEAN SEARCH REPORT
## ON EUROPEAN PATENT APPLICATION NO.

EP 24 20 3377

This annex lists the patent family members relating to the patent documents cited in  the above-mentioned European search report.
The members are as contained in the European Patent Office EDP file on
The European Patent Office is in no way liable for these particulars which are merely given for the purpose of information.

07-02-2025

| Patent document cited in search report | Publication date | Patent family member(s) | Publication date |
|---|---|---|---|
| EP 3772148 A1 | 03-02-2021 | NONE | |

EPO FORM P0459

For more details about this annex : see Official Journal of the European Patent Office, No. 12/82